(19) Europäisches Patentamt

European Patent Office

Office européen des brevets

(11) **EP 2 445 592 B1**

(12) **EUROPEAN PATENT SPECIFICATION**

(45) Date of publication and mention
of the grant of the patent:
**03.07.2013 Bulletin 2013/27**

(51) Int Cl.:
*A62C 35/68* (2006.01)          *F16K 17/10* (2006.01)
*F16K 31/383* (2006.01)

(21) Application number: **10726495.4**

(22) Date of filing: **22.06.2010**

(86) International application number:
**PCT/EP2010/058781**

(87) International publication number:
**WO 2010/149639 (29.12.2010 Gazette 2010/52)**

(54) **A HIGH PRESSURE GAS DISCHARGE VALVE FOR A FIRE-EXTINGUISHING OR EXPLOSION-PREVENTING SYSTEM**

HOCHDRUCK-GASENTLADUNGSVENTIL FÜR EIN BRANDLÖSCH- ODER EXPLOSIONSSCHUTZSYSTEM

SOUPAPE D'EVACUATION DE GAZ SOUS HAUTE PRESSION POUR SYSTEME D'EXTINCTION D'INCENDIE OU DE PREVENTION D'EXPLOSION

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **24.06.2009  LU 91581**

(43) Date of publication of application:
**02.05.2012  Bulletin 2012/18**

(73) Proprietor: **LUXEMBOURG PATENT COMPANY S.A.**
**7440 Lintgen (LU)**

(72) Inventor: **ANDREAS, Thomas**
**54441 Temmels (DE)**

(74) Representative: **Office Freylinger**
**P.O. Box 48**
**8001 Strassen (LU)**

(56) References cited:
**EP-A2- 0 010 465     EP-B1- 0 888 152**
**US-A- 4 699 351**

EP 2 445 592 B1

## Description

### Technical field

The present invention generally relates to a high pressure discharge valve and more particularly to a high pressure discharge valve to be equipped with a low pressure triggering device and to be used in a fire-extinguishing system or in an explosion-prevention system.

### Background Art

The applicant offers an automatic fire-extinguishing system under the commercial designation "FireDeTec®". A "FireDeTec®" system enables automatic detection and release of extinguishing agent without any external power source. This is achieved by means of a passive triggering device, more specifically, by means of a heat-sensitive tubing that bursts under the influence of heat. A core component of this system is a specially designed discharge valve, to which the heat sensitive tubing is to be connected. The discharge valve is designed for pressurizing the heat sensitive tubing and for setting off discharge of high pressure extinguishing agent from a pressurized container in case of rupture of the tubing.

A high pressure discharge valve of this type is known from European Patent EP 0 888 152. This valve comprises a valve body defining an inlet channel, an outlet channel and a valve seat there between. A closing piston is slidably movable within the valve body in axial prolongation of the valve seat. It further includes a triggering chamber for connection to the aforementioned triggering device, i.e. the heat sensitive tubing. A first end portion of the closing piston forms a pressure surface in the triggering chamber. At a second end portion, the closing piston forms a sealing surface, with which it can be pressed against the valve seat to seal the seat. The closing piston further has a pressure compensation channel through which the triggering chamber communicates with the inlet channel when the closing piston rests on the valve seat. A triggering port, to which the triggering device can be connected, communicates with the triggering chamber to pressurize the triggering device. Upon rupture, the triggering device causes a pressure drop in the triggering chamber whereby the closing piston moves off the seat to cause the valve to discharge.

A particular aspect of the discharge valve of EP 0 888 152 resides in that a pressure-reducing valve is provided in between the triggering chamber and the triggering port. The pressure-reducing valve reduces the pressure of high pressure gas, at which the inlet channel and, due to the compensation channel, also the triggering chamber are pressurized, to a reduced pressure. This allows pressurizing the triggering device, i.e. the heat sensitive tubing, at a lower pressure. Thus, by virtue of the pressure-reducing valve, the heat sensitivity of the triggering tubing, which depends on its internal pressure, is rendered less dependent on changes in ambient temperature causing a variation in pressure of the high pressure gas in the container and thus at the inlet. This advantage enables, among others, the use of $CO_2$ as fire extinguishing agent. Moreover, a discharge valve equipped with a pressure-reducing valve according to EP 0 888 152 enables setting the internal pressure of the triggering tubing independently of the inlet pressure, i.e. the container pressure, whereby the same type of tubing can be used for different extinguishing agents and container pressures, and whereby tubing pressure may be adjusted according to local requirements. Moreover, the service life of the tubing increases with lower internal operating pressure.

Due to their undeniable advantages, "FireDeTec®" systems equipped with a discharge valve according to EP 0 888 152 have found widespread use during the last decade. Besides their successful use in fire-extinguishing systems, "FireDeTec®" systems have also been proposed as explosion-preventing systems for high-pressure containers, especially high-pressure fuel containers, such as CNG cylinders. Nevertheless, minor drawbacks of a discharge valve according to EP 0 888 152, when compared to prior art discharge valves without pressure-reduction, reside in the comparatively larger size of the discharge valve and, in that (re-)filling of the container onto which the valve is mounted must be carried out very carefully and slowly to prevent inadvertent discharge. A discharge valve that has been enhanced to facilitate the filling operation has been proposed by the Applicant in international patent application WO 01/80955. A valve design according to WO 01/80955 however further increases the valve size and, moreover, the manufacturing cost of the valve.

### Technical problem

In view of the above, it is a first object of the present invention to provide a high pressure gas discharge valve, in particular for a fire-extinguishing or for an explosion-preventing system, that has a more compact size while facilitating (re-)filling of a gas container onto which the valve is mounted.

This object is achieved by a high pressure gas discharge valve as claimed in claim 1.

**General Description of the Invention**

A high pressure gas discharge valve in accordance with the present invention comprises: a valve body with an inlet channel and an outlet channel, a valve seat arranged between the inlet channel and the outlet channel and a triggering chamber; a closing piston, which is slidably movable within the valve body in axial prolongation of the valve seat, this closing piston having a first end portion forming a pressure surface in the triggering chamber, a second end portion forming a sealing surface, with which it can be pressed against the valve seat to seal the latter, and a pressure compensation channel through which the triggering chamber can communicate with the inlet channel when the closing piston rests on the valve seat. The valve further has a triggering port in communication with the triggering chamber, for connecting thereto a low pressure triggering device, this low pressure triggering device being capable of generating a pressure drop in the triggering chamber; and a pressure-reducing valve for reducing a pressure (P1) of high pressure gas in the inlet channel to a reduced pressure (P2) suitable for the low pressure triggering device.

According to an important aspect of the present invention, the pressure-reducing valve is integrated into the closing piston and is designed so as to seal the pressure compensation channel in the closing piston when the pressure in the triggering chamber is higher than the reduced pressure (P2) and to open this pressure compensation channel when the pressure in the triggering chamber is lower than the reduced pressure (P2). The pressure surface of the closing piston in the triggering chamber is dimensioned so that the closing piston is firmly pressed with its sealing surface against the valve seat, when the pressure in the triggering chamber equals the reduced pressure (P2).

As will be appreciated, integration of the pressure reducing-valve into the closing piston enables a considerable reduction in construction size of the discharge valve. In addition, since the pressure reducing-valve is configured to isolate the triggering chamber from the inlet in case the pressure in the triggering chamber is at least equal to the reduced pressure (P2), rapid filling without a risk of undesired opening of the discharge valve is enabled by simply pressurizing the triggering chamber at a pressure greater than (or at least equal to) the mentioned reduced pressure (P2), which the pressure reducing-valve is set to create in the triggering chamber.

In a preferred embodiment, the pressure-reducing valve includes a biasing means, in particular a spring, urging the pressure-reducing valve to open the pressure compensation channel in the closing piston. This embodiment enables adjusting the bias exerted by the biasing means and thereby the desired reduced pressure for the triggering device as required, e.g. by appropriate selection of the spring.

In a simple and cost-effective embodiment, the pressure-reducing valve is advantageously configured as a seat valve. In preferred embodiment for integration of the pressure-reducing valve into the closing piston, the former includes: a pressure-reducing valve seat equipping the pressure compensation channel in the closing piston; a pressure-reducing piston which is slidably movable within a bore of the closing piston and axially relative to the pressure-reducing valve seat. This pressure-reducing piston has a first end forming a pressure surface exposed to the pressure in the triggering chamber and a second end with a sealing means with which it can be pressed against the pressure-reducing valve seat. A spring is urging the pressure-reducing piston away from its pressure-reducing valve seat. In a preferred embodiment, the pressure-reducing piston includes an axial bore opening into the pressure surface at the first end of the piston and a sealing ring that is arranged in the axial bore to cooperate with a sealing pin that is fixed to the valve body in axial prolongation of the axial bore. Thereby, passage of gas through the pressure-reducing valve can be selectively prevented because the sealing pin seals the axial bore when the pressure-reducing piston is lifted off the pressure-reducing valve seat by a predetermined axial distance. Accordingly, the latter features selectively permit a total discharge of the triggered valve while maintaining compensation of small leakages, i.e. slow pressure drops in the triggering chamber. The pressure-reducing piston further advantageously includes: a cross bore near its second end, the cross bore being in communication with a chamber surrounding the pressure-reducing valve seat; and an axial bore opening with one end into the cross bore and with the other end into the pressure surface at the first end of the pressure-reducing piston or into the axial bore that cooperates with the sealing pin.

The pressure-reducing piston is advantageously configured as a stepped piston with a large diameter section at its first end and a small diameter section at its second end. In this case, the large diameter section of the pressure-reducing piston is guided, in sealed manner by means of a large diameter sealing ring, within a large diameter bore opening into the pressure surface at the first end portion of the closing piston whereas the small diameter section of the pressure-reducing piston is guided, in sealed manner by means of a small diameter sealing ring, within a small diameter bore of the closing piston, in which the pressure-reducing valve seat is arranged. The closing piston is also advantageously configured as a stepped piston with a large diameter section at its first end and a small diameter section at its second end. Accordingly, the large diameter section of the closing piston is guided by means of a large diameter sealing ring within a large diameter bore in the valve body; and the small diameter section of the closing piston is guided by means of a small diameter sealing ring within a small diameter bore in the valve body, in which the discharge valve seat is arranged. In a further enhancement of the latter embodiment of the valve, a first annular space is axially sealed by the large diameter sealing ring and the small diameter sealing ring of the closing piston. This space is vented by means of a vent bore in the valve body. A second annular space, which is axially sealed by the large diameter sealing ring and the small diameter sealing ring of the pressure-reducing piston, is in communication with the first annular space via a bore in the closing piston. The second annular space advantageously forms a spring chamber for the spring urging the pressure-reducing piston away from its pressure-reducing valve seat. An axial stopper for the pressure-reducing piston may be easily formed by a circlip arranged in the large diameter bore of the closing piston.

The triggering port may be equipped with a shut-off valve, whereby interruption of the discharge is enabled as set out further below. Furthermore, the valve body advantageously includes a filling port opening into the inlet channel, for filling a container, e.g. a high pressure gas cylinder, as set out above.

The invention also provides a fire-extinguishing system comprising: a gas cylinder containing an extinguishing gas at high pressure; a high pressure gas discharge valve in accordance with the invention and, additionally, a low pressure triggering device, e.g. a heat sensitive tubing, which is in communication with the triggering chamber of the high pressure gas discharge valve and which is capable of generating a pressure drop in the triggering chamber.

The invention also provides an explosion-preventing system for protecting a high pressure gas tank against explosion in case of overheating. The latter system comprises: a high pressure gas discharge valve in accordance with the invention, which is configured as safety relief valve for the high pressure gas tank and connected at its triggering port to a low pressure triggering device capable of generating a pressure drop in the triggering chamber in case of a risk of overheating of the high pressure gas tank.

## Brief Description of the Drawings

Further details and advantages of the present invention will be apparent from the following detailed - but not limiting - description of two preferred embodiments with reference to the attached drawings, wherein:

Fig. 1  is a cross sectional view of a high pressure gas discharge valve in accordance with the invention;

Fig. 2  is an enlarged cross sectional view of the valve of Fig. 2, the section plane being perpendicular to the section plane in Fig. 1; and

Fig. 3  is an enlarged cross-sectional view of a second embodiment of a high pressure gas discharge valve in accordance with the invention.

## Detailed Description with Respect to the Drawings

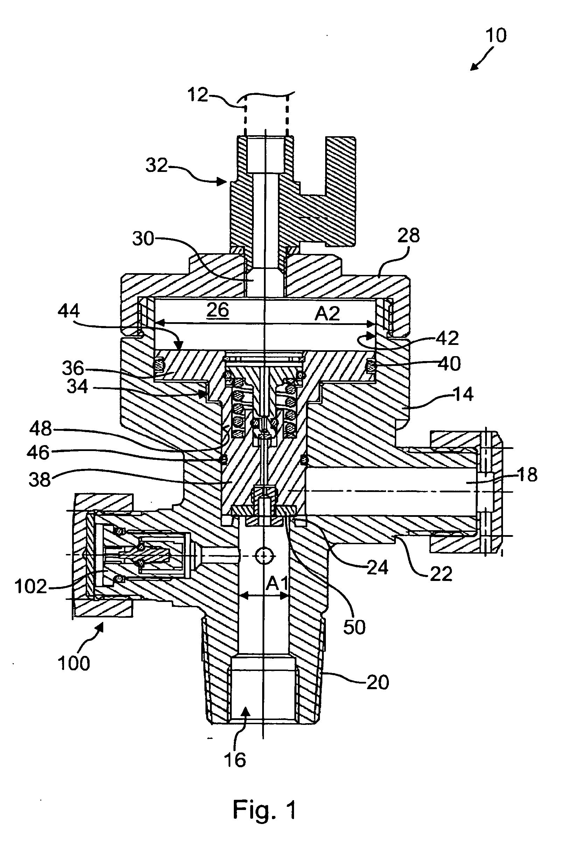

The valve 10 shown in FIG. 1 is a gas discharge valve to be screwed into a valve socket of a gas container (not shown) containing a high pressure gas, e.g. a gas at a pressure in the range of 60 to 300 bar. The valve 10 may equip a gas cylinder containing a fire-extinguishing gas, to trigger a discharge in case of a fire, or a gas cylinder containing e.g. a combustible gas, to trigger a controlled emergency discharge of the compressed combustible gas in case of a risk of explosion due to overheating.

Reference number 12 identifies a low pressure triggering device, which is only schematically represented in FIG. 1. Such a low pressure triggering device 12 may e.g. comprise a triggering hose made of a gas-tight thermoplastic material, which is designed to resist, at normal ambient temperature, to an internal gas pressure of 15 to 25 bar and to rupture under the same pressure if there is e.g. an abnormal temperature increase. Alternative embodiments of the low pressure triggering device 12 may comprise e.g. a device with a heat-sensitive glass bulb or fusible link as used in a fire sprinkler head or an electrically or a pneumatically operated low pressure venting valve.

The valve 10 comprises a valve body 14 with a gas inlet channel 16 and a gas outlet channel 18. The gas inlet channel 16 is arranged in a threaded socket 20, which is configured to be screwed into a valve socket of the high pressure gas container (not shown). The gas outlet channel 18 is arranged in a lateral connecting socket 22 of the valve body 14. A valve seat 24 is arranged in the valve body 14 between the inlet channel 16 and the outlet channel 18. Reference number 26 identifies a triggering chamber in the valve body 14, in axial alignment with the valve seat 24. This triggering chamber 26 is closed by a valve cap 28, which includes a triggering port 30 opening into the triggering chamber 26. The triggering port 30 is equipped with a triggering port shut-off valve 32, to which the aforementioned low pressure triggering device 12 is connected.

Arrow 34 globally identifies a closing piston 34 that is slidably movable within the valve body 12 in axial prolongation of the valve seat 24. This closing piston 34 is a stepped piston with a large diameter section 36 at its first end and a small diameter section 38 at its second end. The large diameter section 36 of the closing piston 34 is guided in a sealed manner by means of a large diameter sealing ring 40 within a large diameter bore 42 in the valve body 14. Its rear end forms a pressure surface 44 within the triggering chamber 26. Reference A2 designates the area of the cross-section sealed by the large diameter sealing ring 40, i.e. the area of the pressure surface 44. The small diameter section 38 of the closing piston 34 is guided in a sealed manner by means of a small diameter sealing ring 46 within a small diameter bore 48 in the valve body 14, in which the valve seat 24 is arranged. Its front end supports a seat sealing ring 50. The latter forms a sealing surface with which the closing piston 34 can be pressed against the valve seat 24 to prevent high pressure gas from flowing from the gas inlet channel 16 over the valve seat 24 into the gas outlet channel 18. Reference A1 designates the area of the cross-section sealed on the valve seat 24 by the closing piston 34.

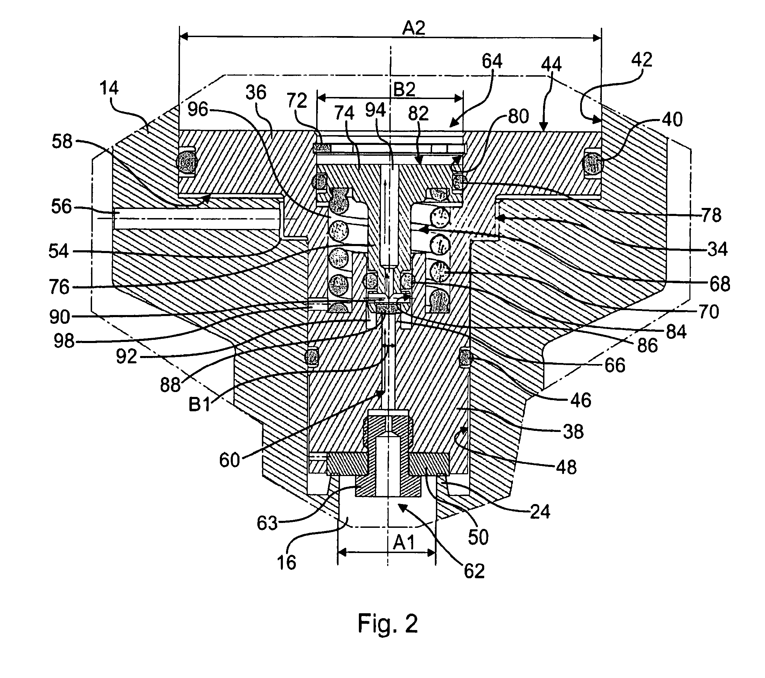

The following description refers to the enlarged cross-section of Fig. 2, in which the section plane is perpendicular to the section plane shown in Fig. 1.

In the valve 10, an annular space 54 is provided, which is radially delimited by the stepped closing piston 34 in the stepped bore 42, 48 and is axially sealed by the large diameter sealing ring 40 on one side and the small diameter sealing ring 46 on the other side. This annular space 54 is vented via a vent bore 56 in the valve body 14. It follows that the annular backside 58 of the large diameter section 36 of the closing piston 34 is always exposed to atmospheric pressure and that the annular space 54 is duly vented during movement of the closing piston 34.

Reference number 60 points to a pressure compensation channel via which the triggering chamber 26 is in communication with the gas inlet channel 16. This pressure compensation channel 60 has an inlet opening 62 arranged within a throttling nozzle 63 located centrally within seat sealing ring 50, so that the pressure compensation channel 60 is always in communication with the high pressure gas in the gas inlet channel 16, even when the closing piston 34 is pressed against the valve seat 24.

Within the closing piston 34, the pressure compensation channel 60 opens into a pressure-reducing valve, which is globally identified with reference number 64 and has as an object to reduce the pressure (P1) of the high pressure gas to a reduced pressure (P2) that is suitable for the low pressure triggering device 12. This pressure-reducing valve 64 is integrated into the closing piston 34 and is designed so as to seal the pressure compensation channel 60 when the pressure in the triggering chamber 26 is higher than the reduced pressure (P2) and to open the pressure compensation channel 60 when the pressure in the triggering chamber is lower than the reduced pressure (P2).

The pressure-reducing valve 64 comprises a pressure-reducing valve seat 66, which is associated with the pressure compensation channel 60 in the closing piston 34, a pressure-reducing piston 68, which is slidably movable within a stepped bore of the closing piston 34, in axial prolongation of the pressure-reducing valve seat 66, and a spring 70, which urges the pressure-reducing piston 68 away from its pressure-reducing valve seat 66. A circlip 72 in the stepped bore forms an axial stopper for the pressure-reducing piston 68.

The pressure-reducing piston 68 is a stepped piston with a large diameter section 74 at its first end and a small diameter section 76 at its second end. The large diameter section 74 of the pressure-reducing piston 68 is guided in a sealed manner, by means of a large diameter sealing ring 78, within a large diameter bore 80 opening into the pressure surface 44 of the closing piston 34 (B2 is the cross-section sealed by the large diameter sealing ring 78). Its rear end forms a pressure surface 82 exposed to the gas pressure in the triggering chamber 26. The small diameter section 76 of the pressure-reducing piston 68 is guided in a sealed manner, by means of a small diameter sealing ring 84, within a small diameter bore 86 of the closing piston 34. Its front end supports a sealing member 88, cooperating with pressure-reducing valve seat 66, which is arranged in the small diameter bore 86 of the closing piston 34 (B1 is the cross-section sealed on the pressure-reducing valve seat 66 by the pressure-reducing piston 68).

A cross bore 90 is arranged in the small diameter section 76 of the pressure-reducing piston 68. This cross bore 90 is in communication with a seat chamber 92 located in the small diameter bore 86 and surrounding the pressure-reducing valve seat 66. An axial bore 94 extending through the pressure-reducing piston 68 opens with one end into the cross bore 90 and with the other end into the pressure surface 82 at the first end of the pressure-reducing piston 68. It follows that if the pressure-reducing piston 68 lifts from its pressure-reducing valve seat 66, gas from the gas inlet channel 16 flows through the throttling nozzle 63, the pressure compensation channel 60 and the pressure-reducing valve seat 66 into the seat chamber 92, from where it flows through the cross bore 90 and the axial bore 94 into the triggering chamber 26.

Reference number 96 points to an annular space surrounding the stepped pressure-reducing piston 68 in the stepped bore 80, 86 and housing the spring 70. This annular space 96 is axially sealed by the large diameter sealing ring 78 on one side and the small diameter sealing ring 84 on the other side. The annular space 96 communicates, via a bore 98 in the closing piston 34, with the annular space 54, which is vented via the vent bore 56 in the valve body 14. It follows that the annular backside of the large diameter section 74 of the pressure-reducing piston 68 is always exposed to atmospheric pressure and that the annular space 96 is duly vented during movement of the pressure-reducing piston 68.

Given the following values: P1 is the pressure in the gas inlet channel 16; P2 is the reduced pressure for which the low pressure triggering device 12 has been designed; B1 is the cross-section sealed on the pressure-reducing valve seat 66 by the pressure-reducing piston 68; B2 is cross-section sealed by the large diameter sealing ring 78 of the pressure-reducing piston 68; and FS is the spring force; then the sealed cross-sections B1 and B2 and the spring 70 shall be dimensioned to satisfy:

$$B1 \cdot P1 + FS = B2 \cdot P2$$

It will be noted that B1/B2 shall be dimensioned as small as technically and economically feasible in order minimize the influence of P1 on P2.

Similarly, given the following values: A1 is the cross-section sealed on the valve seat 24 by the closing piston 34 and A2 is the cross-section sealed by the large diameter sealing ring 40, then the sealed cross-sections A1 and A2 shall be dimensioned to satisfy:

$$A2 \cdot P2 = X \cdot P1 \cdot A1$$

where X is a security factor greater than 1 (i.e.: X > 1). Normally, X should be in the range of about 1,1 to 1,4, more preferably in the range of 1,2 to 1,3. In other words, the pressure in the triggering chamber 26 must fall below P2/X before the pressure P1 will be capable of lifting the closing piston 34 from its valve seat 24.

The normal operation of the valve 10 is as follows: If the triggering chamber 26 is filled with gas at the pressure P2, the pressure-induced force acting on the pressure surface 44 of the closing piston 34 will be sufficient to keep the closing piston 34 on its valve seat 24. If there is a small leakage of gas out of the triggering chamber 26, the pressure in the triggering chamber 26 will fall below P2 and the pressure-reducing valve 64 will open the pressure compensation channel 60 in the closing piston 34. Gas from the gas inlet channel 16 may now flow via the throttling nozzle 63, the pressure compensation channel 60, the pressure-reducing valve seat 66, the seat chamber 92, the cross bore 90 and the axial bore 94 into the triggering chamber 26, where it will compensate the small leakage. When the pressure in the triggering chamber 26 becomes equal to P2 again, the pressure-reducing valve 64 will close the pressure compensation channel 60 in the closing piston 34. Thus, the valve 10 is capable of maintaining a relatively constant and reduced pressure in the triggering chamber 26 even if there are small leakages of gas out of the triggering chamber 26.

However, if the low pressure triggering device 12 generates an important leakage rate over the triggering port 30 out of the triggering chamber 26, the compensation gas flowing via the throttling nozzle 63, the pressure compensation channel 60 and the open pressure-reducing valve 64 into the triggering chamber 26 will no longer be capable of compensating this important leakage rate. It follows that the pressure in the triggering chamber 26 will fall below the pressure P2/X, i.e. the pressure necessary to maintain the closing piston 34 on its valve seat 24. The pressure P acting onto the closing piston 34 resting on the valve seat 24 will consequently lift the closing piston 34 from the valve seat 24. High pressure gas will then be discharged by the valve 10 through the open valve seat 24 and the gas outlet channel 18.

It will be appreciated that the high pressure gas discharge valve 10 as described hereinbefore facilitates refilling of a gas container equipped with this valve 10. In Fig. 1, reference number 100 points to a separate filling port opening into the inlet channel 16 of the valve 10. This separate filling port 100 is advantageously equipped with a known filling port check-valve 102, which prevents high pressure gas from a gas container equipped with the valve 10 from escaping out of the filling port 100, but allows refilling the gas container through the filling port 100 with a high pressure gas. With a prior art valve according to EP 0 888 152, such a refilling has to be effected extremely carefully, because a fast increase of pressure in the filling port 100 at the start of the refilling operation lifts the closing piston 34 from its valve seat 24, and gas is then discharged out of the gas outlet channel 18.

It will therefore be appreciated that with a valve 10 as described hereinbefore, such an inopportune opening during refilling can be easily prevented by simply pressurizing-prior to the refilling operation-the triggering chamber 26 with gas at a pressure P0 higher than P2/X. Preferably, the pressure P0 shall be equal to or slightly higher than the reduced pressure P2 for which the low pressure triggering device 12 has been dimensioned. This pressurized gas in the triggering chamber 26 will safely close the valve 10 by firmly pressing the closing piston 34 onto its valve seat 24. Simultaneously, it will close the pressure-reducing valve 64, thereby closing the pressure compensation channel 60 in the closing piston 34, which will reliably prevent a gas leakage from the triggering chamber 26 into the empty or partially empty gas container. After having pressurized the triggering chamber 26, a fast increase of pressure in the filling port 100 at the start of the refilling operation will no longer be capable of lifting the closing piston 34 from its valve seat 24.

Pressurizing of the triggering chamber 26 prior to a refilling operation may e.g. be carried out through the triggering port shut-off valve 32. The triggering chamber 26 may also be provided with a separate pressurizing port (not shown in the drawings) opening into the triggering chamber 26. Such a separate pressurizing port is advantageously equipped with a filling port check-valve. The solution with a separate pressurizing port is of course recommended if the low pressure triggering device 12 remains connected to the triggering port shut-off valve 32 during a refilling operation.

It will also be appreciated that, contrary to functionally comparable prior art valves according to EP 0 888 152 and WO 01/80955, which are designed as "total-discharge" valves, the presently disclosed valve 10 allows partial discharge of the gas container to which its inlet channel 16 is connected. When using valves according to EP 0 888 152 and WO 01/80955, the cylinder connected to the valve is always discharged completely once the triggering device 12 causes the closing piston to open. In contrast, by virtue of a valve 10 as described hereinbefore, discharge may be interrupted by closing the triggering port shut-off valve 32, so as to allow the pressure-reducing valve 64 to compensate the stopped leakage, i.e. to allow pressure in the triggering chamber 26 to raise back to P2. As will be understood, this capability is particularly advantageous for demonstration purposes, since it avoids the need to refill the cylinder after each demonstration. Furthermore, using a motorized shut-off valve 32, e.g. a solenoid valve, connected to a control system, the proposed valve 10 also allows automatically dosed discharge in function of actual needs. In safety-relevant applications however, the shut-off valve 32 is preferably omitted or blocked in open position using appropriate means.

Finally, a valve 10 as described hereinbefore may further have a manometer port and/or an overpressure safety discharge port (not shown in the drawings), both opening into the gas inlet channel 16. Such an overpressure safety discharge port may e.g. be equipped with a rupture disk. Furthermore, the triggering chamber 26 may be equipped with a separate manometer (not shown in the drawings) for checking the reduced pressure in the triggering chamber 26.

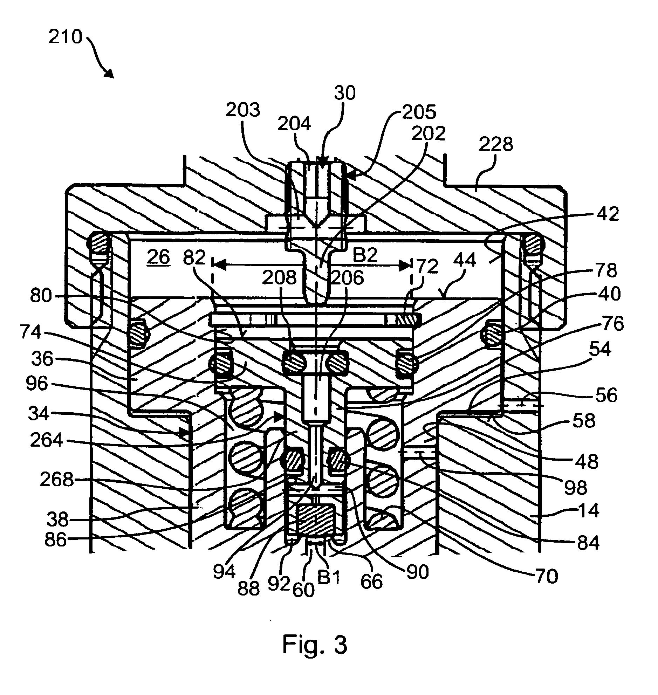

Fig.3 partially shows an enlarged cross-section of a second preferred embodiment of a high-pressure discharge valve 210. In Fig.3, parts that are modified or added with respect to Figs.1-2 are identified by reference signs that are incremented by two hundred. Other parts are substantially identical in structure and function to those described hereinabove are identified by identical reference numerals.

As seen in Fig.3, the pressure-reducing valve 264 has a modified pressure-reducing piston 268 compared to Figs.1-2. The pressure-reducing piston 268 has a stepped axial bore i.e., in axial prolongation of its small diameter axial bore 94, a large diameter bore 206 that opens into the triggering chamber 26. The large diameter bore 206 is provided with an internal groove that holds a prestressed sealing ring 208. The sealing ring 208 cooperates with the lower tip of a sealing pin 202. The sealing pin 202 is fixed to the valve body 14 and arranged coaxially with the pressure-reducing piston 268. More specifically, the sealing pin 202 is screwed into a coaxial thread 205 provided in the valve cap 228 in axial prolongation of the triggering port 30. In order to warrant communication of the triggering chamber 26 with the triggering device 12 (not shown in Fig.3) as described hereinbefore, the sealing pin 202 is provided with a cross-bore 203 that crosses an axial blind bore 204 that communicates with the triggering port 30. The cross-bore 203 communicates with the triggering chamber 26 though a countersunk recess provided in the valve cap 228 coaxially with the thread 205.

As appears from Fig.3, the tip of the sealing pin 202 cooperates with the sealing ring 208 so as to seal i.e. close the large diameter bore 206 when the pressure-reducing piston 268 is lifted from its seat 66 by a sufficient axial amount. Therefore, under normal operating conditions, the valve 210 does not allow pressure in the triggering chamber 26 to raise back to P2 once the pressure-reducing valve 264 has moved to its fully open i.e. triggered position due to a sudden pressure drop in the triggering chamber 26 that has been induced by the triggering device 12 (not shown in Fig.3). In fact, when the pressure-reducing piston 268 is fully open, the sealing pin 202 closes the passage from the pressure compensation channel 60 to the triggering chamber 26, as appears from Fig.3. Consequently, a pressure P2 sufficient to move the pressure-reducing piston 264 back onto its valve seat 66 cannot be re-established in the triggering chamber 26. As will be understood however, between the tip of the sealing pin 202 and the associated sealing ring 208 there is a predetermined axial distance that is sufficient to permit the pressure-reducing piston 268 to be lifted off its seat 66 by a small distance without the sealing pin 202 engaging the associated sealing ring 208. Accordingly, the valve 210 of Fig.3 also features the above-described compensation of small leakages of gas out of the triggering chamber 26, which do not cause a complete opening of the pressure-reducing piston 264.

In conclusion, as opposed to the valve of Figs.1-2, the valve 210 of Fig.3 is designed as total discharge valve. In other words, once triggered by the triggering device 12, the valve 210 completely discharges the content of the gas container (not shown). A design according to Fig.3 is thus preferred for safety-relevant applications. Moreover, the design of Fig.3 has the benefit of avoiding valve chatter, i.e. oscillation of the pressure-reducing piston 268 and of the closing piston 34. In fact, in case the pressure drop caused in the triggering device 12 (not shown in Fig.3) is not sufficiently pronounced, e.g. in case the rupture in a heat sensitive triggering hose is located at a long distance from the triggering port 30, a buffer pressure may build up. In such cases, a design according to Figs.1-2 may cause alternating closure and opening of the integrated pressure-reducing valve 68 and thereby cause undesired valve chatter. By preventing the triggered pressure-reducing valve 264 from building up pressure in the triggering chamber 26, the valve 210 also warrants a more constant mass flow rate through the gas outlet channel 18 (not shown in Fig.3).

## List of reference signs:

| | | |
|---|---|---|
| | 68 | pressure-reducing piston |
| | 70 | spring |
| FIG.1-2 | 72 | circlip |
| 10 | high pressure gas discharge valve | 74 | large diameter section (of 68) |
| 12 | low pressure triggering device | 76 | small diameter section (of 68) |
| 14 | valve body | 78 | large diameter sealing ring |

(continued)

| | | | |
|---|---|---|---|
| 16 | gas inlet channel | 80 | large diameter bore |
| 18 | gas outlet channel | 82 | pressure surface (on 74) |
| 20 | threaded socket | 84 | small diameter sealing ring |
| 22 | lateral connecting socket | 86 | small diameter bore |
| 24 | valve seat | 88 | sealing member |
| 26 | triggering chamber | 90 | cross bore |
| 28 | valve cap | 92 | seat chamber |
| 30 | triggering port | 94 | axial bore (in 68) |
| 32 | triggering port shut-off valve | 96 | annular space |
| 34 | closing piston | 98 | bore (in 68) |
| 36 | large diameter section (of 34) | 100 | filling port |
| 38 | small diameter section (of 34) | 102 | filling port check-valve |
| 40 | large diameter sealing ring of 34 | A1 | sealed cross-section area of 24 |
| | | A2 | sealed cross-section area of 44 |
| 42 | large diameter bore | B1 | sealed cross-section area of 66 |
| 44 | pressure surface | B2 | sealed cross-section area of 82 |
| 46 | small diameter sealing ring of 34 | | FIG.3 |
| | | 202 | sealing pin |
| 48 | small diameter bore | 203 | cross bore (in 202) |
| 50 | seat sealing ring | 204 | axial bore (in 202) |
| 54 | annular space | 205 | thread |
| 56 | vent bore in 14 | 206 | large diameter bore |
| 58 | annular back side | 208 | sealing ring |
| 60 | pressure compensation channel (in 34) | 210 | high pressure gas discharge valve |
| 62 | inlet opening of 60 | 228 | valve cap |
| 63 | throttling nozzle | 264 | pressure-reducing valve |
| 64 | pressure-reducing valve | 268 | pressure-reducing piston |
| 66 | pressure-reducing valve seat | | |

## Claims

1. A high pressure gas discharge valve for a fire-extinguishing or explosion-preventing system, said valve comprising:

a valve body (14) with a gas inlet channel (16) and a gas outlet channel (18), a valve seat (24) arranged between the inlet channel (16) and the outlet channel (18) and a triggering chamber (26);
a closing piston (34) which is slidably movable within the valve body (14) in axial prolongation of the valve seat (24), this closing piston (34) having a first end portion forming a pressure surface (44) in the triggering chamber (26), a second end portion forming a sealing surface, with which it can be pressed against the valve seat (24) to seal the latter, and a pressure compensation channel (60) via which the triggering chamber (26) can communicate with the inlet channel (16) when the closing piston (34) rests on the valve seat (24);
a triggering port (30) in communication with the triggering chamber (26), for connecting thereto a low pressure triggering device (12), this low pressure triggering device (12) being capable of generating a pressure drop in the triggering chamber (26); and
a pressure-reducing valve (64) for reducing a pressure (P1) of high pressure gas to a reduced pressure (P2) suitable for the low pressure triggering device (12);
**characterized in that**
the pressure-reducing valve (64) is integrated into the closing piston (34) and is designed so as to seal the pressure compensation channel (60) in the closing piston (34) when the pressure in the triggering chamber (26) is higher than said reduced pressure (P2) and to open the pressure compensation channel (60) when the pressure in the triggering chamber (26) is lower than said reduced pressure (P2); and
the pressure surface (44) of the closing piston (34) in the triggering chamber (26) is dimensioned so that the closing piston (34) is firmly pressed with its sealing surface against the valve seat (24), when the pressure in the triggering chamber (26) equals said reduced pressure (P2).

**2.** The valve as claimed in claim 1, wherein the pressure-reducing valve (64) includes a biasing means, in particular a spring (70), urging the pressure-reducing valve (64) to open the pressure compensation channel (60) in the closing piston (34).

**3.** The valve as claimed in claim 1 or 2, wherein the pressure-reducing valve (64) is configured as a seat valve.

**4.** The valve as claimed in claim 1, wherein the pressure-reducing valve (64; 264) includes:

a pressure-reducing valve seat (66) arranged in the pressure compensation channel (60) in the closing piston (34);
a pressure-reducing piston (68; 268) which is slidably movable within a bore of the closing piston (34) axially relative to the pressure-reducing valve seat (66),
this pressure-reducing piston (68; 268) having a first end forming a pressure surface exposed to the pressure in the triggering chamber (26) and a second end with a sealing means with which it can be pressed against the pressure-reducing valve seat (66); and
a spring (70) urging the pressure-reducing piston (68; 268) away from its pressure-reducing valve seat (66).

**5.** The valve as claimed in claim 4, wherein:

the pressure-reducing piston (268) includes
an axial bore (206) opening into the pressure surface at the first end of the pressure-reducing piston (268) and communicating with a chamber (92) near the second end of the pressure-reducing piston (268), and
a sealing ring (208) that is arranged in said axial bore (206);
said valve (210) further comprises a sealing pin (202) fixed to said valve body (14) in axial prolongation of said axial bore (206) in said pressure-reducing piston (268) and cooperating with said sealing ring (208) to seal said axial bore (206) when said pressure-reducing piston (268) is lifted off said pressure-reducing valve seat (66) by a predetermined axial distance.

**6.** The valve as claimed in claim 4 or 5, wherein the pressure-reducing piston (68; 268) includes:

a cross bore (90) near its second end, said cross bore being in communication with a seat chamber (92) surrounding the pressure-reducing valve seat (66); and
an axial bore (94) opening with one end into the cross bore (90) and with the other end into the pressure surface at the first end of the pressure-reducing piston (68) or into the axial bore (206).

**7.** The valve as claimed in claim 4, 5 or 6, wherein the pressure-reducing piston (68; 268) is a stepped piston with large diameter section (74) at its first end and a small diameter section (76) at its second end, wherein:

the large diameter section (74) of the pressure-reducing piston (68; 268) is guided by means of a large diameter sealing ring (78) within a large diameter bore (80) opening into the pressure surface at the first end portion of the closing piston (34); and
the small diameter section (76) of the pressure-reducing piston (68; 268) is guided by means of a small diameter sealing ring (84) within a small diameter bore (86) of the closing piston (34), in which the pressure-reducing valve seat (66) is arranged.

**8.** The valve as claimed in claim any one of claims 1 to 7, wherein the closing piston (34) is a stepped piston with a large diameter section (36) at its first end and a small diameter section (38) at its second end, wherein:

the large diameter section (36) of the closing piston (34) is guided by means of a large diameter sealing ring (40) within a large diameter bore (42) in the valve body (14); and
the small diameter section (38) of the closing piston (34) is guided by means of a small diameter sealing ring (46) within a small diameter bore (48) in the valve body (14), in which the valve seat (24) is arranged.

**9.** The valve as claimed in claims 7 and 8, wherein:

a first annular space (54), which is axially sealed by the large diameter sealing (40) ring and by the small diameter sealing ring (46) of the closing piston (34), is vented via a vent bore (56) in the valve body (14); and
a second annular space (96), which is axially sealed by the large diameter sealing ring (78) and the small diameter sealing ring (84) of the pressure-reducing piston (68; 268), is in communication with the first annular space (54) via a bore (98) in the closing piston (34), said second annular space (96) preferably forming a spring chamber for said spring (70).

10. The valve as claimed inclaim 7 or 9, wherein a circlip (72) arranged in the large diameter bore (80) of the closing piston (34) forms an axial stopper for the pressure-reducing piston (68; 268).

11. The valve as claimed in any one of the preceding claims, wherein the triggering port (30) is equipped with a triggering port shut-off valve (32).

12. The valve as claimed in any one of the preceding claims, wherein the valve body (14) includes a filling port (100) opening into the inlet channel (16).

13. A fire-extinguishing system comprising:

a gas cylinder containing an extinguishing gas at high pressure; and
a high pressure gas discharge valve (10; 210) as claimed in any one of claims 1 to 12, said gas cylinder being connected to said inlet channel (16).

14. The fire-extinguishing system according to claim 13, further comprising:

a low pressure triggering device (12) connected to the triggering port (30) of the high pressure gas discharge valve (10; 210) and being capable of generating a pressure drop in the triggering chamber (26).

15. A system for preventing explosion of a high pressure gas tank in case of overheating comprising:

a high pressure gas discharge valve (10; 210) as claimed in any one of claims 1 to 12, configured as safety relief valve for said high pressure gas tank; and
a low pressure triggering device (12) connected to the triggering port (30) of the high pressure gas discharge valve (10) and being capable of generating a pressure drop in the triggering chamber (26) in case of an overheating risk of said high pressure gas tank.

**Patentansprüche**

1. Hochdruck-Gasaustragsventil für ein Feuerlösch- oder Explosionsschutzsystem, wobei das Ventil Folgendes umfasst:

einen Ventilkörper (14) mit einem Gaseinlasskanal (16) und einem Gasauslasskanal (18), einem zwischen dem Einlasskanal (16) und dem Auslasskanal (18) angeordneten Ventilsitz (24) und einer Auslösekammer (26);
einen Schließkolben (34), welcher in dem Ventilkörper (14) in axialer Verlängerung des Ventilsitzes (24) verschiebbar beweglich ist, wobei dieser Schließkolben (34) Folgendes aufweist: einen eine Druckfläche (44) in der Auslösekammer (26) bildenden ersten Endabschnitt, einen eine Dichtfläche bildenden zweiten Endabschnitt, mit welchem er gegen den Ventilsitz (24) zum Abdichten des letzteren gepresst werden kann, und
einen Druckausgleichskanal (60), über welchen die Auslösekammer (26) eine Verbindung mit dem Einlasskanal (16) bilden kann, wenn der Schließkolben (34) auf dem Ventilsitz (24) aufliegt;
einen Auslöseanschluss (30), der in Verbindung mit der Auslösekammer (26) steht, um eine Niederdruck-Auslösevorrichtung (12) daran anzuschließen, wobei diese Niederdruck-Auslösevorrichtung (12) in der Lage ist, einen Druckabfall in der Auslösekammer (26) zu erzeugen; und
ein Druckreduzierventil (64) zur Reduzierung eines Drucks (P1) von Hochdruckgas zu einem für die Niederdruck-Auslösevorrichtung (12) geeigneten reduzierten Druck (P2);
**dadurch gekennzeichnet, dass**
das Druckreduzierventil (64) in den Schließkolben (34) integriert ist und
derart ausgelegt ist, dass es den Druckausgleichskanal (60) in dem Schließkolben (34) abdichtet, wenn der Druck in der Auslösekammer (26) höher als der reduzierte Druck (P2) ist, und den Druckausgleichskanal (60) öffnet, wenn der Druck in der Auslösekammer (26) niedriger als der reduzierte Druck (P2) ist; und
die Druckfläche (44) des Schließkolbens (34) in der Auslösekammer (26) derart dimensioniert ist, dass der Schließkolben (34) fest mit seiner Dichtfläche gegen den Ventilsitz (24) gepresst ist, wenn der Druck in der Auslösekammer (26) dem reduzierten Druck (P2) gleicht.

2. Ventil nach Anspruch 1, wobei das Druckreduzierventil (64) ein Vorspannmittel, insbesondere eine Feder (70), umfasst, die das Druckreduzierventil (64) derart drückt, dass es den Druckausgleichskanal (60) in dem Schließkolben (34) öffnet.

3. Ventil nach Anspruch 1 oder 2, wobei das Druckreduzierventil (64) als Sitzventil konfiguriert ist.

4. Ventil nach Anspruch 1, wobei das Druckreduzierventil (64; 264) Folgendes umfasst:

einen Druckreduzierventilsitz (66), der in dem Druckausgleichskanal (60) in dem Schließkolben (34) angeordnet ist;
einen Druckreduzierkolben (68; 268), welcher in einer Bohrung des Schließkolbens (34) axial relativ zu dem Druckreduzierventilsitz (66) verschiebbar beweglich ist, wobei dieser Druckreduzierkolben (68; 268) ein erstes Ende, das eine dem Druck in der Auslösekammer (26) ausgesetzte Druckfläche bildet, und ein zweites Ende mit einem Dichtmittel, mit welchem er gegen den Druckreduzierventilsitz (66) gepresst werden kann, aufweist; und
eine Feder (70), die den Druckreduzierkolben (68; 268) von dessen Druckreduzierventilsitz (66) fortdrückt.

5. Ventil nach Anspruch 4, wobei:

der Druckreduzierkolben (268) Folgendes umfasst:

eine Axialbohrung (206), die sich in die Druckfläche am ersten Ende des Druckreduzierkolbens (268) öffnet und mit einer Kammer (92) nahe dem zweiten Ende des Druckreduzierkolbens (268) in Verbindung steht, und
einen Dichtring (208), der in der Axialbohrung (206) angeordnet ist;

wobei das Ventil (210) ferner einen Dichtstift (202) umfasst, der in axialer Verlängerung der Axialbohrung (206) in dem Druckreduzierkolben (268) am Ventilkörper (14) befestigt ist und mit dem Dichtring (208) zusammenwirkt, um die Axialbohrung (206) abzudichten, wenn der Druckreduzierkolben (268) um einen vorgegebenen Axialabstand von dem Druckreduzierventilsitz (66) abgehoben ist.

6. Ventil nach Anspruch 4 oder 5, wobei der Druckreduzierkolben (68; 268) Folgendes umfasst:

eine Querbohrung (90) nahe seinem zweiten Ende, wobei die Querbohrung mit einer den Druckreduzierventilsitz (66) umgebenden Sitzkammer (92) in Verbindung steht; und
eine Axialbohrung (94), die sich mit einem Ende in die Querbohrung (90) und mit dem anderen Ende in die Druckfläche des ersten Endes des Druckreduzierkolbens (68) oder in die Axialbohrung (206) öffnet.

7. Ventil nach Anspruch 4, 5 oder 6, wobei der Druckreduzierkolben (68; 268) ein Stufenkolben mit einem Großdurchmesserabschnitt (74) an seinem ersten Ende und einem Kleindurchmesserabschnitt (76) an seinem zweiten Ende ist, wobei:

der Großdurchmesserabschnitt (74) des Druckreduzierkolbens (68; 268) mittels eines Großdurchmesserdichtrings (78) in einer sich in die Druckfläche am ersten Endabschnitt des Schließkolbens (34) öffnenden Großdurchmesserbohrung (80) geführt ist; und
der Kleindurchmesserabschnitt (76) des Druckreduzierkolbens (68; 268) mittels eines Kleindurchmesserdichtrings (84) in einer Kleindurchmesserbohrung (86) des Schließkolbens (34), in welcher der Druckreduzierventilsitz (66) angeordnet ist, geführt ist.

8. Ventil nach irgendeinem der Ansprüche 1 bis 7, wobei der Schließkolben (34) ein Stufenkolben mit einem Großdurchmesserabschnitt (36) an seinem ersten Ende und einem Kleindurchmesserabschnitt (38) an seinem zweiten Ende ist, wobei:

der Großdurchmesserabschnitt (36) des Schließkolbens (34) mittels eines Großdurchmesserdichtrings (40) in einer Großdurchmesserbohrung (42) in dem Ventilkörper (14) geführt ist; und
der Kleindurchmesserabschnitt (38) des Schließkolbens (34) mittels eines Kleindurchmesserdichtrings (46) in einer Kleindurchmesserbohrung (48) in dem Ventilkörper (14), in welcher der Ventilsitz (24) angeordnet ist, geführt ist.

9. Ventil nach Anspruch 7 und 8, wobei:

ein erster ringförmiger Raum (54), welcher durch den Großdurchmesserdichtring (40) und durch den Kleindurchmesserdichtring (46) des Schließkolbens (34) axial abgedichtet ist, über eine Belüftungsbohrung (56) in dem Ventilkörper (14) belüftet ist; und

ein zweiter ringförmiger Raum (96), welcher durch den Großdurchmesserdichtring (78) und den Kleindurchmesserdichtring (84) des Druckreduzierkolbens (68; 268) axial abgedichtet ist, über eine Bohrung (98) in dem Schließkolben (34) mit dem ersten ringförmigen Raum (54) in Verbindung steht, wobei der zweite ringförmige Raum (96) vorzugsweise einen Federraum für die Feder (70) bildet.

10. Ventil nach Anspruch 7 oder 9, wobei ein in der Großdurchmesserbohrung (80) des Schließkolbens (34) angeordneter Sicherungsring (72) einen Axialanschlag für den Druckreduzierkolben (68; 268) bildet.

11. Ventil nach irgendeinem der vorangehenden Ansprüche, wobei der Auslöseanschluss (30) mit einem Auslöseanschluss-Absperrventil (32) versehen ist.

12. Ventil nach irgendeinem der vorangehenden Ansprüche, wobei der Ventilkörper (14) einen sich in den Einlasskanal (16) öffnenden Füllanschluss (100) umfasst.

13. Feuerlöschsystem umfassend:

einen Gaszylinder, der ein Löschgas bei Hochdruck enthält; und
ein Hochdruck-Gasaustragsventil (10; 210) nach irgendeinem der Ansprüche 1 bis 12, wobei der Gaszylinder mit dem Einlasskanal (16) verbunden ist.

14. Feuerlöschsystem nach Anspruch 13, ferner umfassend:

eine Niederdruck-Auslösevorrichtung (12), die mit dem Auslöseanschluss (30) des Hochdruck-Gasaustragsventils (10; 210) verbunden ist und in der Lage ist, einen Druckabfall in der Auslösekammer (26) zu erzeugen.

15. System zur Verhinderung einer Explosion eines Hochdruck-Gasbehälters im Falle von Überhitzung, umfassend:

ein Hochdruck-Gasaustragsventil (10; 210) nach irgendeinem der Ansprüche 1 bis 12, das als Sicherheitsabblaseventil für den Hochdruck-Gasbehälter konfiguriert ist; und
eine Niederdruck-Auslösevorrichtung (12), die mit dem Auslöseanschluss (30) des Hochdruck-Gasaustragsventils (10) verbunden ist und in der Lage ist, einen Druckabfall in der Auslösekammer (26) im Falle einer Überhitzungsgefahr des Hochdruck-Gasbehälters zu erzeugen.

**Revendications**

1. Vanne de décharge de gaz haute pression pour un système d'extinction d'incendie ou de prévention d'explosion, ladite vanne comprenant :

un corps (14) de vanne avec un canal d'entrée (16) de gaz et un canal de sortie (18) de gaz, un siège (24) de vanne agencé entre le canal d'entrée (16) et le canal de sortie (18) et une chambre de déclenchement (26) ;
un piston de fermeture (34) qui est mobile en coulissement à l'intérieur du corps (14) de vanne en prolongement axial du siège (24) de vanne, ce piston de fermeture (34) ayant une première partie d'extrémité formant une surface de pression (44) dans la chambre de déclenchement (26), une deuxième partie d'extrémité formant une surface d'étanchéité, avec laquelle il peut être pressé contre le siège (24) de vanne pour fermer ce dernier de façon étanche, et un canal (60) de compensation de pression par l'intermédiaire duquel la chambre de déclenchement (26) peut communiquer avec le canal d'entrée (16) lorsque le piston de fermeture (34) repose sur le siège (24) de vanne ;
un orifice de déclenchement (30) en communication avec la chambre de déclenchement (26), pour connecter à celle-ci un dispositif de déclenchement (12) basse pression, ce dispositif de déclenchement (12) basse pression étant apte à générer une chute de pression dans la chambre de déclenchement (26) ; et

une vanne de détente (64) pour réduire une pression (P1) de gaz haute pression jusqu'à une pression réduite (P2) appropriée au dispositif de déclenchement (12) basse pression ;

**caractérisée en ce que**

la vanne de détente (64) est intégrée dans le piston de fermeture (34) et est conçue de façon à fermer de façon étanche le canal (60) de compensation de pression dans le piston de fermeture (34) lorsque la pression dans la chambre de déclenchement (26) est supérieure à ladite pression réduite (P2) et à ouvrir le canal (60) de compensation de pression lorsque la pression dans la chambre de déclenchement (26) est inférieure à ladite pression réduite (P2) ; et

la surface de pression (44) du piston de fermeture (34) dans la chambre de déclenchement (26) est dimensionnée de telle manière que le piston de fermeture (34) est fermement pressé avec sa surface d'étanchéité contre le siège (24) de vanne, lorsque la pression dans la chambre de déclenchement (26) est égale à ladite pression réduite (P2).

2.  Vanne selon la revendication 1, dans laquelle la vanne de détente (64) inclut un moyen de poussée, en particulier un ressort (70), forçant la vanne de détente (64) à ouvrir le canal (60) de compensation de pression dans le piston de fermeture (34).

3.  Vanne selon la revendication 1 ou 2, dans laquelle la vanne de détente (64) est configurée comme une vanne à siège.

4.  Vanne selon la revendication 1, dans laquelle la vanne de détente (64 ; 264) inclut :

    un siège (66) de vanne de détente agencé dans le canal (60) de compensation de pression dans le piston de fermeture (34) ;

    un piston de détente (68 ; 268) qui est mobile en coulissement à l'intérieur d'un alésage du piston de fermeture (34) axialement par rapport au siège (66) de vanne de détente, ce piston de détente (68 ; 268) ayant une première extrémité formant une surface de pression exposée à la pression dans la chambre de déclenchement (26) et une deuxième extrémité avec un élément d'étanchéité avec lequel il peut être pressé contre le siège (66) de vanne de détente ; et

    un ressort (70) poussant le piston de détente (68 ; 268) à l'écart de son siège (66) de vanne de détente.

5.  Vanne selon la revendication 4, dans laquelle :

    le piston de détente (268) inclut

    un alésage axial (206) s'ouvrant dans la surface de pression à la première extrémité du piston de détente (268) et communiquant avec une chambre (92) à proximité de la deuxième extrémité du piston de détente (268), et une bague d'étanchéité (208) qui est agencée dans ledit alésage axial (206) ;

    ladite vanne (210) comprend en outre une tige d'étanchéité (202) fixée audit corps (14) de vanne en prolongement axial dudit alésage axial (206) dans ledit piston de détente (268) et coopérant avec ladite bague d'étanchéité (208) pour fermer de façon étanche ledit alésage axial (206) lorsque ledit piston de détente (268) est soulevé dudit siège (66) de vanne de détente d'une distance axiale prédéterminée.

6.  Vanne selon la revendication 4 ou 5, dans laquelle le piston de détente (68 ; 268) inclut :

    un alésage transversal (90) à proximité de sa deuxième extrémité, ledit alésage transversal étant en communication avec une chambre (92) de siège entourant le siège (66) de vanne de détente ; et

    un alésage axial (94) s'ouvrant avec une extrémité dans l'alésage transversal (90) et avec l'autre extrémité dans la surface de pression à la première extrémité du piston de détente (68) ou dans l'alésage axial (206).

7.  Vanne selon la revendication 4, 5 ou 6, dans laquelle le piston de détente (68 ; 268) est un piston à épaulement avec une section (74) de grand diamètre à sa première extrémité et une section (76) de petit diamètre à sa deuxième extrémité, dans laquelle :

    la section (74) de grand diamètre du piston de détente (68 ; 268) est guidée au moyen d'une bague d'étanchéité (78) de grand diamètre à l'intérieur d'un alésage (80) de grand diamètre s'ouvrant dans la surface de pression à la première partie d'extrémité du piston de fermeture (34) ;

    et

    la section (76) de petit diamètre du piston de détente (68 ; 268) est guidée au moyen d'une bague d'étanchéité (84) de petit diamètre à l'intérieur d'un alésage (86) de petit diamètre du piston de fermeture (34), dans lequel le siège (66) de vanne de détente est agencé.

8. Vanne selon l'une quelconque des revendications 1 à 7, dans laquelle le piston de fermeture (34) est un piston à épaulement avec une section (36) de grand diamètre à sa première extrémité et une section (38) de petit diamètre à sa deuxième extrémité, dans laquelle :

   la section (36) de grand diamètre du piston de fermeture (34) est guidée au moyen d'une bague d'étanchéité (40) de grand diamètre à l'intérieur d'un alésage (42) de grand diamètre dans le corps (14) de vanne ; et
   la section (38) de petit diamètre du piston de fermeture (34) est guidée au moyen d'une bague d'étanchéité (46) de petit diamètre à l'intérieur d'un alésage (48) de petit diamètre dans le corps (14) de vanne, dans lequel le siège (24) de vanne est agencé.

9. Vanne selon les revendications 7 et 8, dans laquelle :

   un premier espace annulaire (54), qui est axialement fermé de façon étanche par la bague d'étanchéité (40) de grand diamètre et par la bague d'étanchéité (46) de petit diamètre du piston de fermeture (34), est mis à l'air libre par l'intermédiaire d'un alésage (56) d'aération dans le corps (14) de vanne ; et
   un deuxième espace annulaire (96), qui est axialement fermé de façon étanche par la bague d'étanchéité (78) de grand diamètre et par la bague d'étanchéité (84) de petit diamètre du piston de détente (68 ; 268), est en communication avec le premier espace annulaire (54) par l'intermédiaire d'un alésage (98) dans le piston de fermeture (34), ledit deuxième espace annulaire (96) formant préférablement une chambre de ressort pour ledit ressort (70).

10. Vanne selon la revendication 7 ou 9, dans laquelle un circlip (72) agencé dans l'alésage (80) de grand diamètre du piston de fermeture (34) forme un arrêt axial pour le piston de détente (68 ; 268).

11. Vanne selon l'une quelconque des revendications précédentes, dans laquelle l'orifice de déclenchement (30) est équipé d'une vanne de fermeture (32) d'orifice de déclenchement.

12. Vanne selon l'une quelconque des revendications précédentes, dans laquelle le corps (14) de vanne inclut un orifice de remplissage (100) ouvrant dans le canal d'entrée (16).

13. Système d'extinction d'incendie comprenant :

   une bouteille de gaz contenant un gaz d'extinction à haute pression ; et
   une vanne (10 ; 210) de décharge de gaz haute pression selon l'une quelconque des revendications 1 à 12, ladite bouteille de gaz étant connectée audit canal d'entrée (16).

14. Système d'extinction d'incendie selon la revendication 13, comprenant en outre :

   un dispositif de déclenchement (12) basse pression connecté à l'orifice de déclenchement (30) de la vanne (10 ; 210) de décharge de gaz haute pression et étant apte à générer une chute de pression dans la chambre de déclenchement (26).

15. Système de prévention d'explosion d'un réservoir à gaz haute pression en cas de surchauffe comprenant :

   une vanne (10 ; 210) de décharge de gaz haute pression selon l'une quelconque des revendications 1 à 12, configurée comme une vanne de détente de sécurité pour ledit réservoir à gaz haute pression ; et
   un dispositif de déclenchement (12) basse pression connecté à l'orifice de déclenchement (30) de la vanne (10) de décharge de gaz haute pression et étant apte à générer une chute de pression dans la chambre de déclenchement (26) en cas de risque de surchauffe dudit réservoir à gaz haute pression.

Fig. 1

Fig. 2

EP 2 445 592 B1

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0888152 A

- WO 0180955 A